# EUROPÄISCHE PATENTSCHRIFT

(11) **EP 0 944 506 B1**
(45) Veröffentlichungstag und Bekanntmachung des Hinweises auf die Patenterteilung: **22.08.2001**
(21) Anmeldenummer: 97913177.8
(22) Anmeldetag: 24.10.1997
(51) Int. Cl.: B60S 1/16

(54) **ANTRIEBSVORRICHTUNG FÜR EINE SCHEIBENWISCHANLAGE**
DRIVE DEVICE FOR A WINDSCREEN WIPER SYSTEM
DISPOSITIF D'ENTRAINEMENT POUR SYSTEME D'ESSUIE-GLACE

(30) Priorität: 19.12.1996 DE 19652929
(43) Veröffentlichungstag der Anmeldung: 29.09.1999
(73) Patentinhaber: Valeo Auto-Electric Wischer und Motoren GmbH, 74321 Bietigheim-Bissingen (DE)
(72) Erfinder: LEITER, Heinz, D-74376 Gemmrigheim (DE); LÖSCH, Dieter, D-97999 Igersheim (DE); DEISS, Rolf-Dieter, D-74321 Bietigheim-Bissingen (DE)
(74) Vertreter: Dreiss, Fuhlendorf, Steimle & Becker
(86) Internationale Anmeldenummer: EP9705894
(87) Internationale Veröffentlichungsnummer: WO9826963

(56) Entgegenhaltungen:
- DE-A- 4 039 453
- GB-A- 688 559
- US-A- 4 364 615
- US-A- 5 015 897

## Beschreibung

Die Erfindung betrifft eine Antriebsvorrichtung für eine Scheibenwischanlage eines Kraftfahrzeuges mit den Merkmalen des Oberbegriffs des Patentanspruchs 1.

Eine derartige Antriebsvorrichtung ist beispielsweise aus der DE-A-40 39 453 bekannt geworden und umfasst einen Elektromotor, welcher an ein Getriebegehäuse angeflanscht ist. Die Ankerwelle ragt mit einem freien Ende in das Getriebegehäuse und verfügt über eine Schnecke zum Antrieb eines Schneckenrades und Getriebeelemente. Das Schneckengetriebe mit seinen schrägen Flanken führt zu einer Axialkraft an der Ankerwelle, welche in eine bestimmte Richtung weist. In den Umkehrlagen des Scheibenwischers dreht sich die Richtung der Axialkraft an der Welle kurzfristig um, weil die Getriebelemente in umgekehrter Kraftrichtung beansprucht werden. Das Axialspiel der Lagerung lässt bei Richtungsumkehr eine ruckartige axiale Bewegung der Ankerwelle zu, was Geräusche verursacht. Um diese Geräusche zu vermeiden, wird die Ankerwelle an ihrem Wellenende über ein federbeaufschlagtes Anlaufteil axial abgestützt, wobei sich eine Schraubenfeder und das Anlaufteil in einem nach aussen geschlossenen Sackloch des Getriebegehäuses befinden. Zwar wird mit diesen Mitteln eine Axialkraft erzeugt, die die Axialbewegung unterdrücken soll aber eine zuverlässige Abstützung der von dem Schneckengetriebe herrührenden Radialkräfte ist nicht gewährleistet, weil das freie Ende der Ankerwelle in radialer Richtung nicht zuverlässig abgestützt ist. Ferner lässt sich die Höhe der Axialkräfte nicht an unterschiedliche Anforderungen anpassen, weil sie von der Federsteifigkeit abhängt.

Die GB-A- 688 559 zeigt einen Elektromotor mit einer Ankerwelle, auf der endseitig eine Mutter aufgeschraubt ist, die lediglich fest angezogen werden kann. Eine Einstellung der Axialkraft kann nicht erfolgen.

Aufgabe der vorliegenden Erfindung ist es daher, eine Antriebsvorrichtung für Scheibenwischer bereitzustellen, wobei die Ankerwelle zuverlässig in radialer und axialer Richtung gelagert ist und ein Axialspiel der Ankerwelle kostengünstig und wirkungsvoll vermieden wird.

Diese Aufgabe wird erfindungsgemäß mit einer Antriebsvorrichtung gelöst, die die Merkmale des Anspruchs 1 aufweist.

Erfindungsgemäß weist die Axialkrafterzeugungseinrichtung eine federnde Klemmscheibe und ein zwischen Lagerinnenring und Klemmscheibe angeordnetes elastisches Federelement auf. Die Klemmscheibe besitzt einen geringeren Durchmesser als die Ankerwelle und stützt sich kraftschlüssig an dem Ende der Ankerwelle ab. Dadurch ergibt sich in besonders vorteilhafter Art und Weise die Möglichkeit, die von der Axialkrafterzeugungseinrichtung aufgebrachte Kraft präzise zu definieren und sogar noch nach der Montage mit geringem Aufwand einzustellen. Um die Axialkraft zu verändern muss lediglich die Klemmscheibe weiter auf die Welle aufgepresst werden bzw. um ein bestimmtes Stück abgezogen werden, je nach gewünschter Axialkraftsteigerung oder Verringerung.

Diese Antriebsvorrichtung weist den Vorteil auf, dass die Wälzlager für eine stabile Lagerung der Ankerwelle in radialer Richtung sorgen und ein Wälzlager zur Kompensation des Spiels in axialer Richtung herangezogen wird.

Erfindungsgemäss befinden sich die Lager in dem Getriebegehäuse, so dass nur das Getriebegehäuse mit Lagersitzen versehen werden muss.

Bei einer vorteilhaften Ausgestaltung der Erfindung ist die Axialkrafterzeugungseinrichtung dem abtriebsseitigen Wälzlager zugeordnet. Dadurch wird die gemeinsame Montage des abtriebsseitigen Wälzlagers und der Axialkrafterzeugungseinrichtung von einer Seite ermöglicht, ohne die Montageseite nochmals wechseln zu müssen. Damit verbunden ist ferner eine gute Zugänglichkeit der Axialkrafterzeugungseinrichtung um gegebenenfalls nachträglich die Kraft einzustellen.

Weitere vorteilhafte Ausgestaltungen der Erfindung gehen aus den Unteransprüchen zusammen mit der Beschreibung und der Zeichnung hervor. In den Figuren zeigt:

Fig. 1 einen Längsschnitt durch eine Antriebsvorrichtung entlang der Wellenebene mit teilweise aufgeschnitten dargestelltem Getriebegehäuse in zwei Ausführungsformen mit und ohne Stützlager.

Fig. 2 die Axialkrafterzeugungseinrichtung gemäß Fig. 1 in größerem Maßstab.

Fig. 3 Draufsicht auf eine Klemmscheibe in Richtung des Pfeiles III in Fig. 2 in kleinerem Maßstab.

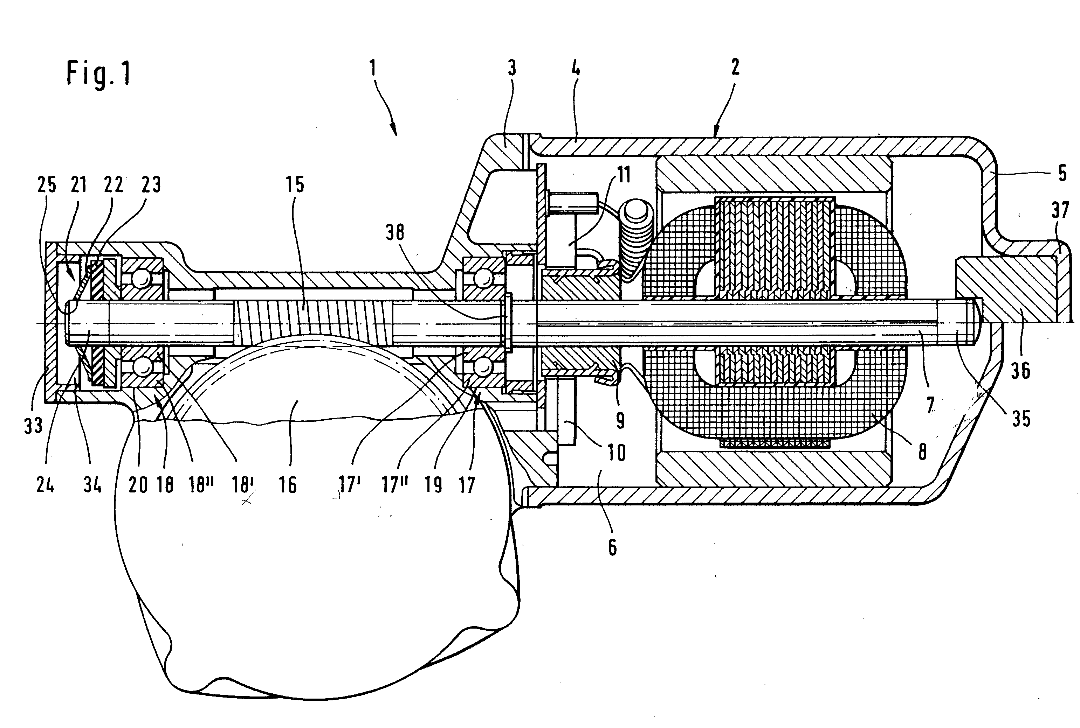

Wie Fig. 1 zeigt, verfügt die Antriebsvorrichtung 1 über einen Elektromotor 2, welcher an ein Getriebegehäuse 3 angeflanscht ist. Das Motorengehäuse 4 ist im wesentlichen topfförmig mit einem Topfboden 5 und einer Öffnung 6, mit der das Gehäuse 4 auf eine Ankerwelle 7 aufgeschoben wird. An der Ankerweile 7 ist ein Rotor 8 mit Wicklungen und ein Kollektor 9 drehfest angeordnet. Der Kollektor 9 wirkt mit Bürsten 10,11 in grundsätzlich bekannter Art und Weise zusammen.

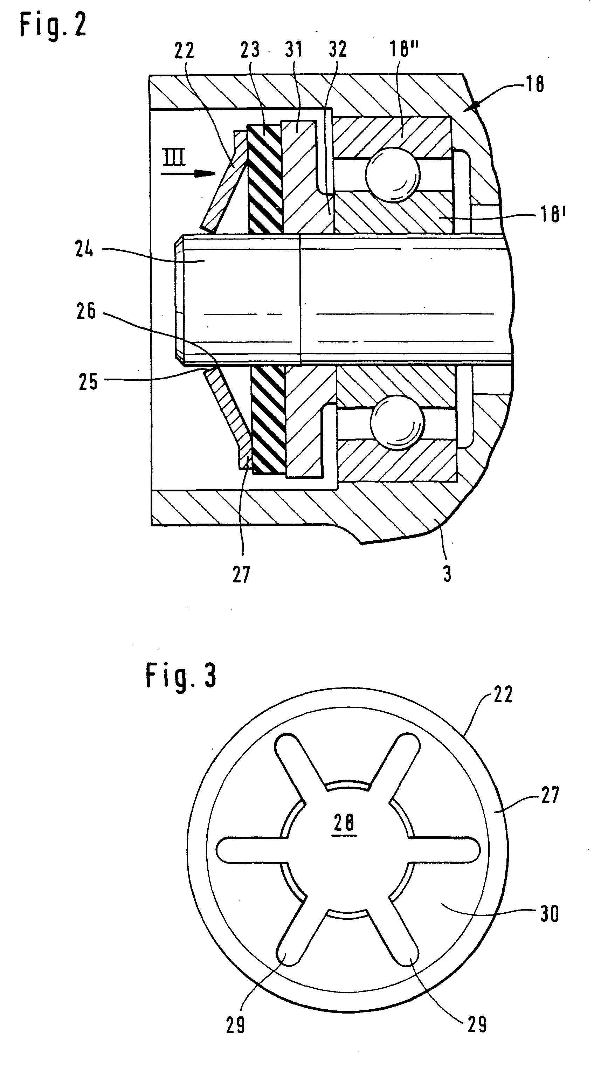

Die Drehbewegung der Ankerwelle 7 wird über eine Schnecke 15 auf ein Schneckenrad 16 und weitere nachgeordnete Getriebeelemente übertragen. Die Ankerwelle 7 ist mit zwei Wälzlagern 17,18 in dem Getriebegehäuse 3 gelagert. Jedes Wälzlager 17,18 verfügt über einen Innenring 17', 18' und einen Außenring 17", 18", welcher in einem Lagersitz 19,20 des Getriebegehäuses 3 kraftschlüssig aufgenommen wird. Wie aus der Figur hervorgeht, ist dem abtriebsseitigen Wälzlager 18 eine Axialkrafterzeugungseinrichtung 21 zugeordnet, welche den Lagerinnenring 18' mit definierter Kraft beaufschlagt. Die Axialkrafterzeugungseinrichtung 21 besitzt eine federnde Klemmscheibe 22 und ein zwischen Innenring 18' und Klemmscheibe 22 angeordnetes elastisches Federelement 23. Es ergibt sich somit eine Kombination der Elastizitäten von Klemmscheibe 22 und Federelement 23, so daß durch die Hintereinanderschaltung eine bestimmte Federsteifigkeit eingestellt werden kann. Die Klemmscheibe 22 verfügt über einen geringeren Innendurchmesser als die Ankerwelle 7 und stützt sich kraftschlüssig mit einer schräg zur Ankerwelle 7 angestellten Klemmfläche 25, welche eine wellenseitige Klemmkante 26 bildet, ab. Dadurch wird sichergestellt, daß die Klemmscheibe 22 nicht ohne weiteres von dem Wellenende 24 abgezogen werden kann. Wie auch die Fig. 2 zeigt, verfügt jede Klemmscheibe 22 über einen Rand 27 zur Anlage an dem elastischen Federelement 23, über eine mittige Bohrung 28 sowie über Schlitze 29, welche bis an den Rand 27 reichen und sich in Richtung auf den Bohrungsmittelpunkt 30 erstrekken. Zwischen je zwei Schlitzen 29 befindet sich jeweils ein federnder Finger 30, welcher gegenüber dem Rand 27 in axialer Richtung konisch abgekröpft ist. Jede Klemmscheibe 22 bildet somit eine konisch verformte Federscheibe. Die Bohrung 28 der Klemmscheibe 22 verfügt über einen geringeren Durchmesser als die Ankerwelle 7, so daß sich die auf die Ankerwelle 7 aufgeschobene Klemmscheibe 22 kraftschlüssig mit der Klemmkante 26 an der Ankerwelle 7 abstützt. Es ist anzumerken, daß die Ankerwelle 7 im Bereich des abtriebsseitigen Wellenendes 24 über eine definierte Oberflächenrauhigkeit verfügt, welche beispielsweise in einer Größenordnung von 1/10 - 2/10 mm Rauhtiefe liegt, so daß sich die Klemmkante 26 auch formschlüssig klemmend an der Wellenoberfläche abstützt. Zwischen der Klemmscheibe 22 und dem Lagerinnenring 18' befindet sich ferner ein scheibenförmiges Druckstück 31 mit einem in Richtung Innenring 18' weisenden Ringflansch 32 zum Beaufschlagen des Innenringes 18'. Dadurch wird sichergestellt, daß nur der Lagerinnenring mit Axialkräften beaufschlagt wird.

Wie Fig. 1 zu entnehmen ist, besitzt das Getriebegehäuse 3 im Bereich des abtriebsseitigen Wellenendes 24 eine mit einem Deckel 33 verschließbare Montageöffnung 34, für das Wälzlager 18 und der Axialkrafterzeugungseinrichtung 21. Ferner kann die Montageöffnung 34 dazu dienen, eine definierte Kraft der Axialkrafterzeugungseinrichtung 21 einzustellen, wenn die Antriebsvorrichtung montiert ist. Es versteht sich, daß zum Aufschieben der Klemmscheibe 22 auf die Ankerwelle 7, diese an dem motorseitigen Wellenende 35 axial abgestützt werden muß.

Ganz grundsätzlich kann das motorseitige Wellenende 35 frei auskragen, ohne daß ein zusätzliches Radiallager notwendig wäre. Dies liegt insbesondere darin begründet, daß die Wälzlager 17,18 in dem Bereich des Getriebegehäuses 3 angeordnet sind, in dem auch die hauptsächlichen Radialkräfte entstehen. Bei einer Abwandlung der Erfindung kann jedoch ein Stützlager 36 vorgesehen sein, welches zur radialen Abstützung des Wellenendes 35 dient. Das Stützlager 36 ist notwendig, wenn das Wellenende 35 mit dem Rotor 8 bei Rotation taumelt. Insofern zieht das Stützlager 36 eine besonders steife Lagerung nach sich. Wie die Figur zeigt, ist das Stützlager 36 in einer napfförmigen Vertiefung 37 des Topfbodens 5 angeordnet und umgreift einen Teil des Wellenendes 35.

Die Montage der Antriebsvorrichtung erfolgt derart, daß zunächst die Ankerwelle 7 zusammen mit den Lagern 17,18 und der Axialkrafterzeugungseinrichtung 21 in dem Getriebegehäuse angeordnet wird, und sodann das Motorgehäuse 4 mit den Magneten über das Wellenende 35 geführt und auf die Ankerwelle 7 mit dem Rotor 8 aufgesteckt wird.

Im Betrieb verhält sich die Antriebsvorrichtung 1 für eine Scheibenwischanlage wie folgt: Der Antrieb des Schneckengetriebes führt ganz grundsätzlich zu einer Axialkraft auf die Ankerwelle 7, welche infolge dessen grundsätzlich danach trachtet, die Ankerwelle 7 aus dem Motorengehäuse 4 herauszuziehen und in das Getriebegehäuse 3 zu pressen. Die betreffende Axialkraft wird über den an der Ankerwelle 7 befestigten Sicherungsring 38, den Innenring 17' sowie den Außenring 17" in das Getriebegehäuse 3 eingeleitet. Eine Axialbewegung der Ankerwelle 7 wird in diesem Betriebszustand mit den beschriebenen Mitteln verhindert. In den Umkehrpunkten des Wischarmes kommt es jedoch zu einer kurzfristigen Umkehrung der auf die Ankerwelle 7 einwirkenden Kraft, welche nunmehr danach trachtet, die Ankerwelle 7 in das Motorengehäuse 4 hineinzuschieben. Eine derartige axiale Verschiebebewegung der Ankerwelle 7 wird mit Hilfe der Axialkrafterzeugungseinrichtung 21 dadurch verhindert, daß der Ankerwelle 7 ständig eine Axialkraft aufgeprägt wird, welche danach trachtet, die Ankerwelle 7 in das Getriebegehäuse 4 hineinzuziehen. Die axiale Vorspannung erfolgt dadurch, daß sich die Klemmscheibe 22 mit einer Klemmkante 26 an der Ankerwelle 7 abstützt und mit einem Rand 27 das elastische Federelement 23 und unter Zwischenschaltung des Druckstücks 31 den Innenring 18' des Wälzlagers 18 beaufschlagt. Weil sich das Wälzlager 18 an dem Lagersitz 20 abstützt, kommt es zu einer permanenten Vorspannung der Ankerwelle 7 in Richtung Deckel 33, so daß die Ankerwelle 7 auch bei Lastwechseln axial spielfrei gelagert ist. Es bleibt darauf hinzuweisen, daß die erfindungsgemäße Antriebsvorrichtung auch Längenunterschiede infolge von Temperaturänderungen ausgleicht, ohne daß es zu Axialbewegungen der Ankerwelle 7 und infolge dessen zu Schlaggeräuschen in Umkehrpunkten kommt.

## Patentansprüche

1. Antriebsvorrichtung, insbesondere für eine Scheibenwischanlage eines Kraftfahrzeuges, welche einen Elektromotor (2) mit einer gelagerten Ankerwelle (7), einer zugeordneten Schnecke (15) zum Antrieb von Getriebeelementen und ein Getriebegehäuse (3) sowie eine Axialkrafterzeugungseinrichtung (21) aufweist, wobei beidseits der Schnecke (15) je ein Wälzlager (17,18) vorgesehen ist, welches sich in einem Lagersitz (19,20) in dem Getriebegehäuse (3) befindet, und einem Wälzlager (17,18) die Axialkrafterzeugungseinrichtung (21) zugeordnet ist, die einen Innenring (17',18') des Wälzlagers (17,18) mit definierter Kraft beaufschlagt, dadurch gekennzeichnet, daß die Axialkrafterzeugungseinrichtung (21) eine federnde Klemmscheibe (22) und ein zwischen Lagerinnenring (18') und Klemmscheibe (22) angeordnetes elastisches Federelement (23) aufweist und und daß die Klemmscheibe (22) eine Bohrung (28) aufweist, deren Durchmesser geringer ist als der Durchmesser der Ankerwelle (7).

2. Antriebsvorrichtung nach Anspruch 1, dadurch gekennzeichnet, daß die Axialkrafterzeugungseinrichturg (21) den in Umkehrpunkten auf die Ankerwelle (7) wirkenden Axialkräften des Schneckengetriebes entgegenwirkt.

3. Antriebsvorrichtung nach Anspruch 1, dadurch gekennzeichnet, daß die Axialkrafterzeugungseinrichtung (21) dem abtriebsseitigen Wälzlager (18) zugeordnet ist.

4. Antriebsvorrichtung nach Anspruch 1, dadurch gekennzeichnet, daß die Axialkräfterzeugungseinrichtung (21) dem antriebsseitigen Wälzlager (17) zugeordnet ist.

5. Antriebsvorrichtung nach einem oder mehreren der vorhergehenden Ansprüche, dadurch gekennzeichnet, daß die Klemmscheibe (22) und das elastische Federelement (23) in Reihe geschaltet sind.

6. Antriebsvorrichtung nach einem oder mehreren der vorhergehenden Ansprüche, dadurch gekennzeichnet, daß das Wellenende (24) eine definierte Oberflächenrauhigkeit aufweist.

7. Antriebsvorrichtung nach einem oder mehreren der vorhergehenden Ansprüche, dadurch gekennzeichnet, daß die Klemmscheibe Schlitze (29) zur Bildung federnder Finger (30) aufweist.

8. Antriebsvorrichtung nach Anspruch 7, dadurch gekennzeichnet, daß die Finger (30) gegenüber einem Rand (27) konisch abgekröpft sind.

9. Antriebsvorrichtung nach einem oder mehreren der vorhergehenden Ansprüche, dadurch gekennzeichnet, daß zwischen Federelement (23) und Innenring (18') ein Druckstück (31) angeordnet ist.

10. Antriebsvorrichtung nach einem oder mehreren der vorhergehenden Ansprüche, dadurch gekennzeichnet, daß das Druckstück (31) scheibenförmig ist und einen Ringflansch (32) im Bereich des Innenrings (18') aufweist.

11. Antriebsvorrichtung nach einem oder mehreren der vorhergehenden Ansprüche, dadurch gekennzeichnet, daß das Getriebegehäuse (3) im Bereich des abtriebsseitigen Wellenendes (24) eine mit einem Deckel (33) verschließbare Montageöffnung (34) aufweist.

12. Antriebsvorrichtung nach einem oder mehreren der vorhergehenden Ansprüche, dadurch gekennzeichnet, daß im Bereich des motorseitigen Wellenendes (35) ein Stützlager (36) vorgesehen ist.

13. Antriebsvorrichtung nach Anspruch 12, dadurch gekennzeichnet, daß das Stützlager (36) in einer napfförmigen Vertiefung (37) des Motorengehäuses (4) angeordnet ist.

## Claims

1. Drive unit, in particular, for a windshield wiper system of a motor vehicle, containing an electric motor (2) with a rotor shaft (7) that runs on bearings, an associated worm (15) for driving gear elements, a gear housing (3) as well as a device (21) for generating an axial force, wherein one respective roller bearing (17, 18) that is situated in a bearing seat (19, 20) in the gear housing (3) is arranged on each side of the worm (15), and wherein the device (21) for generating an axial force is associated with one roller bearing (17, 18) and causes a defined force to act upon an inner race (17', 18') of the roller bearing (17, 18), characterized by the fact that the device (21) for generating an axial force contains a springy clamping disk (22) and an elastic spring element (23) that is arranged between the inner bearing race (18') and the clamping disk (22) and that the clamping disk (22) contains a bore (28), the diameter of which is smaller than that of the rotor shaft (7).

2. Drive unit according to Claim 1, characterized by the fact that the device (21) for generating an axial force counteracts the axial forces of the worm gear which act upon the rotor shaft (7) in the reversing points.

3. Drive unit according to Claim 1, characterized by the fact that the device (21) for generating an axial force is associated with the roller bearing (18) on the output side.

4. Drive unit according to Claim 1, characterized by the fact that the device (21) for generating an axial force is associated with the roller bearing (17) on the driven side.

5. Drive unit according to one or more of the previous claims, characterized by the fact that the clamping disk (22) and the elastic spring element (23) are arranged in series.

6. Drive unit according to one or more of the previous claims, characterized by the fact that the shaft end (24) has a defined surface roughness.

7. Drive unit according to one or more of the previous claims, characterized by the fact that the clamping disk contains slots (29) in order to form elastic fingers (30).

8. Drive unit according to Claim 7, characterized by the fact that the fingers (30) are conically bent with reference to an edge (27).

9. Drive unit according to one or more of the previous claims, characterized by the fact that a thrust piece (31) is arranged between the spring element (23) and the inner race (18').

10. Drive unit according to one or more of the previous claims, characterized by the fact that the thrust piece (31) is realized in the shape of a disk and contains an annular flange (32) in the region of the inner race (18').

11. Drive unit according to one or more of the previous claims, characterized by the fact that the gear housing (3) contains an installation opening (34) that can be closed with a cover (33) in the region of the shaft end (24) on the output side.

12. Drive unit according to one or more of the previous claims, characterized by the fact that a support bearing (36) is provided in the region of the shaft end (35) on the motor side.

13. Drive unit according to Claim 12, characterized by the fact that the support bearing (36) is arranged in a cupshaped depression (37) of the motor housing (4).

## Revendications

1. Dispositif d'entraînement, notamment pour un système d'essuie-glace d'un véhicule automobile, qui comporte un moteur électrique (2) équipé d'un arbre d'induit tourillonné (7), d'une vis sans fin associée (15) pour l'entraînement d'éléments d'une transmission, et un carter (3) pour la transmission ainsi qu'un dispositif (21) de production d'une force axiale, et dans lequel des deux côtés de la vis sans fin (15) il est prévu respectivement un roulement (17, 18), qui est situé dans un siège de roulement (19, 20) dans le carter (3) de la transmission, et à un roulement (17, 28) est associé le dispositif (21) de production de la force axiale, qui charge avec une force définie une bague intérieure (17', 18') du roulement (17, 18), caractérisé en ce que le dispositif (21) de production de la force axiale comporte un disque de serrage élastique (22) et un élément de ressort élastique (23) disposé entre la bague intérieure (18') du roulement et le disque de serrage (22), et que le disque de serrage (22) possède un perçage (28), dont le diamètre est inférieur au diamètre de l'arbre d'induit (7).

2. Dispositif d'entraînement selon la revendication 1, caractérisé en ce que le dispositif (21) de production de la force axiale agit à l'encontre des forces axiales de la transmission à vis sans fin, qui agissent en des points d'inversion sur l'arbre d'induit (7).

3. Dispositif d'entraînement selon la revendication 1, caractérisé en ce que le dispositif (21) de production de la force axiale est associé au roulement (18) situé sur le côté mené.

4. Dispositif d'entraînement selon la revendication 1, caractérisé en ce que le dispositif (21) de production de la force axiale est associé au roulement (17) situé sur le côté entraînement.

5. Dispositif d'entraînement selon une ou plusieurs des revendications précédentes, caractérisé en ce que le disque de serrage (22) et l'élément de ressort élastique (23) sont montés en série.

6. Dispositif d'entraînement selon une ou plusieurs des revendications précédentes, caractérisé en ce que l'extrémité (24) de l'arbre possède une rugosité de surface définie.

7. Dispositif d'entraînement selon une ou plusieurs des revendications précédentes, caractérisé en ce que le disque de serrage comporte des fentes (29) servant à former des doigts élastiques (30).

8. Dispositif d'entraînement selon la revendication 7, caractérisé en ce que les doigts (30) sont coudés selon une disposition conique par rapport à un bord (27) .

9. Dispositif d'entraînement selon une ou plusieurs des revendications précédentes, caractérisé en ce qu'un élément de pression (31) est disposé entre l'élément de ressort (23) et la bague intérieure (18').

10. Dispositif d'entraînement selon une ou plusieurs des revendications précédentes, caractérisé en ce que l'élément de pression (31) est agencé en forme de disque et possède une bride annulaire (32) dans la zone de la bague intérieure (18').

11. Dispositif d'entraînement selon une ou plusieurs des revendications précédentes, caractérisé en ce que le carter (3) de la transmission comporte, dans la zone de l'extrémité (24) de l'arbre, située côté mené, une ouverture de montage (34) pouvant être fermée par un couvercle (33).

12. Dispositif d'entraînement selon une ou plusieurs des revendications précédentes, caractérisé en ce qu'un roulement d'appui (36) est prévu dans la zone de l'extrémité (35) de l'arbre, située côté moteur.

13. Dispositif d'entraînement selon la revendication 12, caractérisé en ce que le roulement d'appui (36) est disposé dans un renfoncement (37), définissant un bouton, du carter (4) du moteur.
